(19) Europäisches Patentamt
European Patent Office
Office européen des brevets

(11) **EP 3 901 814 A1**

(12) **EUROPEAN PATENT APPLICATION**
published in accordance with Art. 153(4) EPC

(43) Date of publication:
**27.10.2021 Bulletin 2021/43**

(51) Int Cl.:
**G06K 9/00** (2006.01)

(21) Application number: **19897973.4**

(22) Date of filing: **18.12.2019**

(86) International application number:
**PCT/CN2019/126367**

(87) International publication number:
**WO 2020/125686 (25.06.2020 Gazette 2020/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **19.12.2018 CN 201811555006**

(71) Applicant: **Changsha Intelligent Driving Institute Corp. Ltd**
**Changsha, Hunan 410208 (CN)**

(72) Inventor: **HE, Zhiguo**
**Changsha, Hunan 410208 (CN)**

(74) Representative: **Hoffmann Eitle**
**Patent- und Rechtsanwälte PartmbB**
**Arabellastraße 30**
**81925 München (DE)**

(54) **METHOD FOR GENERATING REAL-TIME RELATIVE MAP, INTELLIGENT DRIVING DEVICE AND COMPUTER STORAGE MEDIUM**

(57) Disclosed are a method for generating a real-time relative map, an intelligent driving device, and a storage medium. The method includes following steps: determining a number of collected lane guiding lines based on GPS trajectory data and included in a lane guiding line list; if the lane guiding line list includes a plurality of collected lane guiding lines, sorting the plurality of collected lane guiding lines according to coordinate values, which are on a coordinate axis perpendicular to a traveling direction of a vehicle, of points having a same serial number on each of the collected guiding lines, and generating a real-time relative map based on at least the sorted collected lane guiding lines and a lane width.

FIG. 3

**Description**

**TECHNICAL FIELD**

This application relates to the field of intelligent driving technology, in particular, to a method for generating a real-time relative map, an intelligent driving device, and a computer storage medium.

**BACKGROUND**

Intelligent-driving vehicles control the automatic driving of vehicles relying on the collaboration of artificial intelligence, visual computing, radar, a monitoring device, and global positioning system (GPS), which has become an important development direction in the automotive field. During intelligent driving, it is necessary to refer to a map to plan a driving route and to avoid an obstacle. Currently, most autonomous driving schemes are implemented by means of a high-definition map. The high-definition map is rich in map elements, which enables the realization of automatic driving on urban roads in more complex scenes. However, these schemes have disadvantages of difficulty in collecting data, long production cycle, and slow update speed, which cause high cost of the application of the high-definition map during the automatic driving.

The existing real-time relative map can realize a single-lane real-time relative map based on a single-lane guiding line, and can only provide map support for driving on a single lane, but cannot support functions of overtaking, lane changing, and the like, and cannot achieve a long-distance driving. Therefore, in terms of completeness and reliability, the application of the existing real-time relative map is still limited to a demonstration of autonomous driving.

**SUMMARY**

The present application provides a method for generating a real-time relative map, including determining a number of collected lane guiding lines based on GPS trajectory data in a lane guiding line list; when the lane guiding line list comprises a plurality of collected lane guiding lines, sorting the plurality of collected lane guiding lines according to coordinate values, which are on a coordinate axis perpendicular to a traveling direction of a vehicle, of points having a same serial number on each of the collected guiding lines, and generating the real-time relative map based on at least the sorted collected lane guiding lines and a lane width.

Specifically, the method further includes, when the lane guiding line list comprises only one collected lane guiding line, developing one or more derivative lane guiding lines based on the one collected lane guiding line and the lane width, and generating the real-time relative map based on at least one or more derivative lane guiding lines.

Specifically, the method further includes, when there are no lane guiding lines in the lane guiding line list, generating the real-time relative map based on lane guiding lines, which are generated according to lane lines obtained by a vehicle sensor.

Specifically, the method further includes determining a projection point of a vehicle on each lane guiding line, and generating the real-time relative map by taking the projection point as a starting point and extending along a traveling direction of the vehicle.

Specifically, the method further includes determining whether adjacent lane lines overlap; if the adjacent lane lines do not overlap, determining a shared lane line according to one of modes of: taking a central line between the adjacent lane lines as the shared lane line; taking one of the adjacent lane lines proximate to a vehicle as the shared lane line; and taking one of the adjacent lane lines away from the vehicle as the shared lane line.

Specifically, the method further includes, based on conditions of GPS signals and a confidence level of lane lines obtained by a vehicle sensor, generating a merged lane guiding line according to the collected lane guiding lines or derivative lane guiding lines, and/or lane guiding lines generated according to lane lines obtained by a vehicle sensor, and generating the real-time relative map based on the merged lane guiding line.

Specifically, the method further includes, determining whether there is a gap between a front and a rear collected or derivative lane guiding lines on a travel path of a vehicle; if there is a gap, determining whether there is a point pair, points of which are located on a front section and a rear section respectively, and have a distance therebetween less than a preset threshold; and if there are such point pairs, selecting one point pair, points of which have a minimum distance from each other, and when the vehicle reaches one point of the one point pair located on the front section, generating the real-time relative map in subsequent based on the rear section.

Specifically, the method further includes adding restrictions corresponding to traffic rules to the real-time relative map.

The present application further provides a computer storage medium, having a computer program stored thereon, by executing the computer program, a processor being capable of performing any one of the methods above.

The present application further provides an intelligent driving device, including: a processor, and a storage and a network interface, which are coupled with the processor; a GPS unit, configured to obtain location information of an automatic driving device; and a vehicle sensor unit, configured to collect data of lane data of the automatic driving device. Where, the processor is configured to perform any one of the methods above.

The method provided in this application can realize the generation of real-time relative maps of the long-distance and multiple lanes during the automatic driving of the intelligent device, and also solves the problem of a smooth transition of lane guiding lines and non-overlapped adjacent lane lines, thereby reducing the computation complexity and shortening the time of generating the real-time relative maps.

## BRIEF DESCRIPTION OF THE DRAWINGS

The embodiments of the present application will be further described in detail with reference to the accompanying drawings hereinafter, where:

FIG. 1 shows a schematic view of lanes and lane guiding lines;
FIG. 2 shows a schematic view of a Front-Left-Up (FLU) coordinate system and an East-North-Up (ENU) coordinate system;
FIG. 3 shows a schematic view of a plurality of lane guiding lines in the FLU coordinate system;
FIG. 4 shows a flowchart of a method for generating a real-time relative map according to an embodiment of the present application;
FIG. 5 shows a schematic view of a projection relationship between a location of a vehicle and a lane guiding line;
FIG. 6 is a schematic view showing a situation where there is a point pair, points of which are located on front and rear lane guiding lines respectively and have a distance therebetween less than a preset threshold; and
FIG. 7 is a schematic structural view showing an intelligent driving device according to an embodiment of the present application.

## DETAILED DESCRIPTION OF THE EMBODIMENTS

In order to make the objectives, technical solutions and advantages of the embodiments of the present application clearer, the technical solutions in the embodiments of the present application will be described clearly and completely combining the drawings in the embodiments of the present application. Obviously, the described embodiments are only a part of the embodiments of the present application, but not all of the embodiments. Based on the embodiments of this application, all other embodiments obtained by those of ordinary skill in the art without creative work shall fall within the protection scope of this application.

In the following detailed description, reference may be made to the drawings of the specification, which are part of this application, to illustrate specific embodiments of this application. In the accompany drawings, similar reference numerals in different drawings describe substantially similar components. Each specific embodiment of the present application is described sufficiently and in detail herein, so that a person of ordinary skill having relevant knowledge and technology in the art can implement the technical solutions of the present application. It should be understood that structural, logical or electrical changes may be made on the base of other embodiments or made for the embodiments of the present application.

In order to make the objectives, technical solutions, and advantages of the present application clearer, the present application will be further described in detail combining the accompanying drawings and the embodiments. It should be understood that the specific embodiments described herein are only used to illustrate the present application, but not intended to limit the present application.

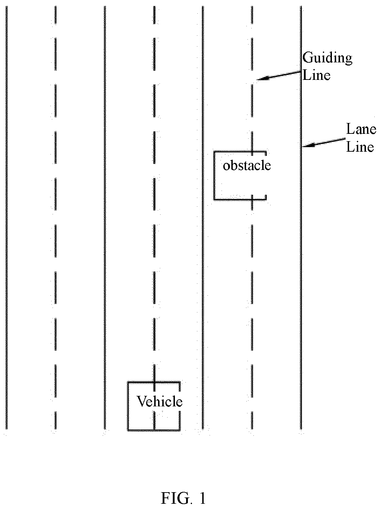

One of the bases for generating a real-time relative map is a lane guiding line. FIG. 1 shows a schematic view of lanes and lane guiding lines. Lane lines, as their names imply, define two boundaries of a lane. The lane guiding line generally refers to a center line of the lane. The guiding line is a reference line necessary for a planning module of an automatic driving system to plan a path and a speed. Each lane can be dynamically generated according to the guiding line and a lane width. The lane width can be dynamically acquired by a sensor or a sensing module on the vehicle. If the sensing module works unstable, the lane width can also be specified according to road design specifications.

There are many data sources for generating the lane guiding line. One source is GPS trajectory data that have been recorded and collected in advance, and GPS positioning is necessary during generation of the lane guiding line by using these data. Another source is lane data obtained in real time by the vehicle sensor.

First, a method of recording and collecting lane guiding line data via GPS is described.

The lane guiding line data are stored in a format of a Front-Left-Up (FLU) coordinate system with respect to a vehicle body. The FLU coordinate system takes the center of the rear axle of the vehicle as the origin of coordinates, takes the traveling direction of the vehicle as the X axis, and takes the direction perpendicular to the traveling direction of the vehicle as the Y axis. Each lane guiding line may be composed of a series of points, and each point can be described by a tuple$(x,y,s,\theta,\kappa,\kappa')$, where (x, y) denote the coordinates of a point on the lane guiding line in the FLU coordinate system.

If the collected data are presented by the East-North-Up (ENU) coordinate system, then the collected data need to be converted from the ENU coordinates into the FLU coordinates.

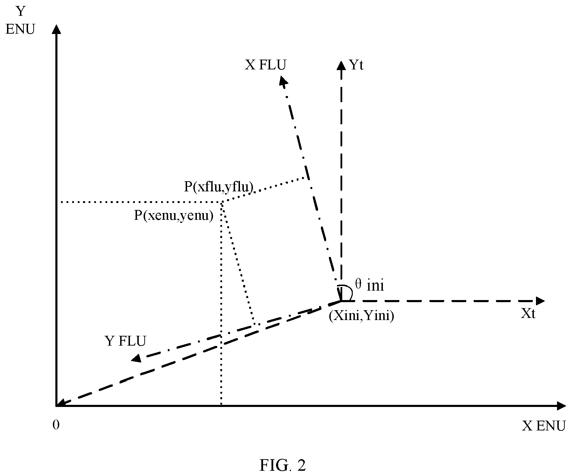

FIG. 2 shows a schematic view of the FLU coordinate system and the ENU coordinate system. Assuming that the position coordinates of the vehicle in the ENU coordinate system are $(x_{ini}, y_{ini})$, the position of the vehicle has a heading $\theta_{ini}$, and that the coordinates of any point P on the guiding line in the ENU coordinate system are $(x_{enu}, y_{enu})$, and that the heading of the point P is $\theta_{enu}$, then the position coordinates $(x_{flu}, y_{flu})$ and the heading $\theta_{flu}$ of the point P in the FLU coordinate system are obtained by following transformation formulas (1) and (2) respectively (during implementation, the range of $\theta_{flu}$ needs to be limited within an interval of $0 \leq \theta_{flu} \leq 2\pi$):

$$x_{flu} = (x_{enu} - x_{ini}) \cos \theta_{ini} + (y_{enu} - y_{ini}) \sin \theta_{ini}$$

$$y_{flu} = (y_{enu} - y_{ini}) \cos \theta_{ini} - (x_{enu} - x_{ini}) \sin \theta_{ini} \qquad (1)$$

$$\theta_{flu} = \theta_{enu} - \theta_{ini} \qquad (2)$$

An *s* in the tuple of a point on the lane guiding line represents a length of the travel path from a starting point (0, 0) in the FLU coordinate system, namely the position of the vehicle, to a current point (x, y) on the lane guiding line.

A $\theta$ in the tuple of the point on the lane guiding line represents the angle between the current point (x, y) on the lane guiding line and the starting point (0, 0) in the FLU coordinate system, and the angle is also known as a heading. The heading in the ENU coordinate system may be converted into the heading in the FLU coordinate system by means of the formula (2).

An $\kappa$ and $\kappa'$ in the tuple of the point on the lane guiding line represent curvature and a first-order derivative of the current point (x, y) on the lane guiding line, respectively.

How to obtain the tuple values of each point on the lane guiding line will be described in detail as follows.

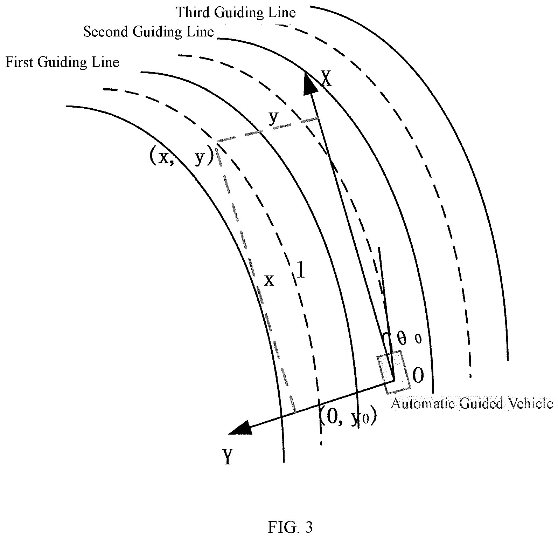

FIG. 3 shows a schematic view of a plurality of lane guiding lines in the FLU coordinate system. In the FLU coordinate system, an initial position of the vehicle can be configured to be the origin (0, 0), the coordinates of the initial point of the lane guiding line may be (xo, yo), and the heading of the initial point of the lane guiding line in the FLU coordinate system may be $\theta_0$. The curvature and the first-order derivative of the lane guiding line may be denoted by $\kappa$ and $\kappa'$ respectively, then the heading $\theta$ of the current point on the guiding line may be calculated by means of formula (3), where *l* denotes a length of a curve running along the guiding line from the current point (x, y) on the lane guiding line to the initial point (xo, yo) of the guiding line, t denotes an integration variable of the curve length along the guiding line:

$$\theta(l) = \theta_0 + \int_0^l \kappa(t)dt$$

$$= \theta_0 + l\kappa + \frac{l^2}{2}\kappa' \qquad (3)$$

In addition, the coordinates (x, y) of the current point on the lane guiding line in the FLU coordinate system may be computed from formulas (4):

$$x = x_0 + \int_0^l \cos\theta(t)dt$$

$$y = y_0 + \int_0^l \sin\theta(t)dt \qquad (4)$$

Assuming that the X-axis coordinate of the initial point of the lane guiding line is consistent with the X-axis coordinate of initial position (0,0) of the vehicle, then $x_0 = 0$, and it may be known that, within a shorter curve length (such as l≤1m), the change rate of the heading of the guiding line is relatively small, thus $\cos\theta(t) \approx 1$, and $\sin\theta(t) \approx \theta(t)$, the formulas (4) can be simplified as

$$x = l$$

$$y = y_0 + \theta_0 x + \frac{\kappa}{2}x^2 + \frac{\kappa'}{6}x^3 \tag{5}$$

Where, $y_0$ denotes an offset of the initial point of the guiding line deviating from the initial position (0, 0) of the vehicle along the Y-axis. If the vehicle travels along the guiding line, then $y_0 = 0$, and $l = s$; otherwise, the offset $y_0$ of the initial point of the guiding line deviating from the initial position of the vehicle along the Y-axis can be obtained by means of sensor data. $\theta_0$ denotes the angle between the X axis of the initial position of the vehicle and the heading of the initial point of the guiding line, and may be obtained by means of sensor data, or directly configured to be $\theta_0 = 0$.

The curvature $\kappa$ and the first-order derivative $\kappa'$ of different positions on the guiding line may be computed from formulas (6), where $\varepsilon = 0.0001$:

$$\kappa = \frac{6\kappa_0'x + 2\kappa_0}{[1 + (3\kappa_0'x^2 + 2\kappa_0 x + \theta_0)^2]^{\frac{3}{2}}}$$

$$\kappa' = \frac{1}{2\varepsilon}\frac{6\kappa_0'\ (x+\varepsilon)\ +2\kappa_0}{\left[1+\left(3\kappa_0'\ (x+\varepsilon)\ ^2 +2\kappa_0\ (x+\varepsilon)\ +\theta_0\right)^2\right]^{\frac{3}{2}}} - \frac{6\kappa_0'\ (x-\varepsilon)\ +2\kappa_0}{\left[1+\left(3\kappa_0'\ (x-\varepsilon)\ ^2 +2\kappa_0\ (x-\varepsilon)\ +\theta_0\right)^2\right]^{\frac{3}{2}}} \tag{6}$$

Where, $\kappa_0$ and $\kappa_0'$ denote the curvature and the first-order derivative of the initial point on the guiding line respectively, and generally have a value 0.

According to the formulas (5), the calculation formula of the heading $\theta$ of the current point on the guiding line may also be expressed as:

$$\theta = \theta_0 + \kappa x + \frac{1}{2}\kappa'x^2 \tag{7}$$

In addition, the travel path S from the vehicle to the current point (x, y) on the guiding line may be calculated by an iterative formula. If a longitudinal travel distance $s_{n-1}$ corresponding to the (n-1)-th point is known, and the coordinates of the (n-1)-th point and the n-th point are $(x_{n-1}, y_{n-1})$ and $(x_n, y_n)$ respectively, then the travel path $s_n$ corresponding to the n-th point may be obtained by formula (8):

$$\begin{cases} s_n = s_{n-1} + \sqrt{(x_n - x_{n-1})^2 + (y_n - y_{n-1})^2} \\ s_0 = 0 \end{cases} \tag{8}$$

According to an embodiment, after the tuple corresponding to each point on the lane guiding line is obtained by means of the above calculation, a corresponding tuple may be defined for each lane guiding line, as shown in formula (9)

$$\mathrm{NaviPathTuple} = (\mathrm{LineIndex, LeftWidth, RightWidth, PAthDataPrt}) \tag{9}$$

Where, LineIndex may denote an index value (LineIndex=0, 1, 2...) of the lane guiding line in all lane guiding lines. LeftWidth and RightWidth may respectively denote the lateral distances between the lane guiding line and the left and right boundaries of the lane where the lane guiding line is located. PathDataPtr may denote a data pointer of the tuple $(x, y, s, \theta, \kappa, \kappa')$ corresponding to each point on the lane guiding line.

According to an embodiment, a lane guiding line list may be established on the base of the tuple of each lane guiding line, and data of one or more recorded lane guiding lines based on GPS may be stored in the lane guiding line list.

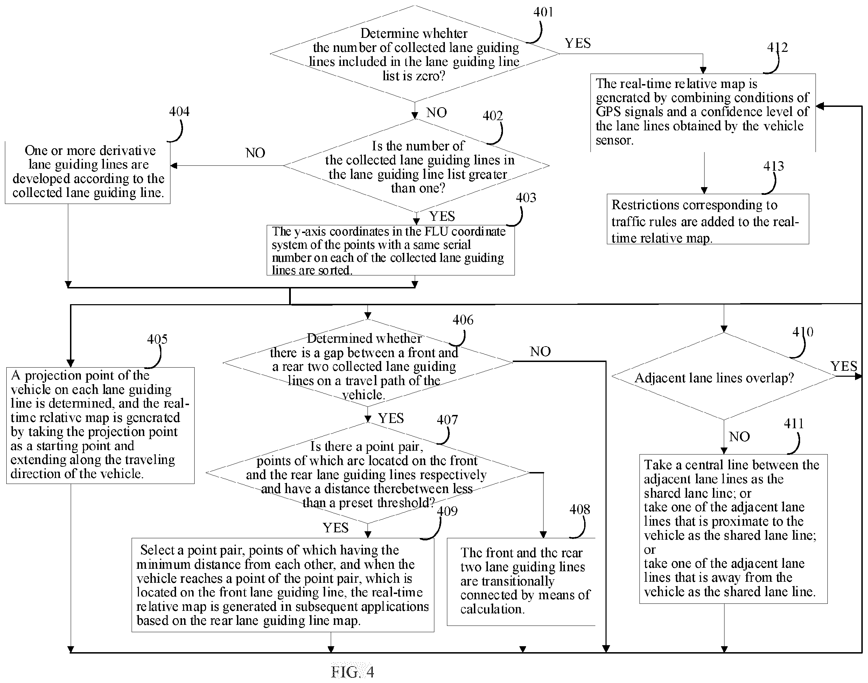

FIG. 4 shows a flowchart of a method for generating a real-time relative map according to an embodiment of the present application. The logic flow shown in FIG. 4 and the serial numbers of the steps described below are all exemplary. Those skilled in the art may make corresponding adjustments to the logical sequence of the steps of these methods without creative work, which does not depart from the protection scope of the present application.

In step 401, it may be determined whether the number of collected lane guiding lines included in the lane guiding line list is 0 (zero). The lane guiding line list includes the collected lane guiding lines presented by pre-recorded GPS trajectory data.

When the number of the lane guiding lines in the lane guiding line list is 0, jump to step 412, which is equivalent to the case that the GPS signals are unstable, and a real-time relative map is generated by using the vehicle sensor. That is, the real-time relative map is generated on the basis of the lane conditions collected by the lane sensor.

When the number of the collected lane guiding lines in the lane guiding line list is not 0, then in step 402, it may be determined whether the number of the collected lane guiding lines in the lane guiding line list is greater than one.

If the number of the collected lane guiding lines in the lane guiding line list is greater than one, then in step 403, the y-axis coordinates in the FLU coordinate system of the points, for example, the starting points, with a same serial number on each of the collected lane guiding lines, are sorted.

According to an embodiment, the FLU coordinates of the initial position of the vehicle are (0, 0), the y-axis coordinate of the guiding line on the left of the vehicle traveling direction is positive, and the farther the lane guiding line is from the vehicle, the greater the absolute value of the y-axis coordinate thereof. The y-axis coordinate of the guiding line on the right of the vehicle traveling direction is negative, and the farther the lane guiding line is from the vehicle, the greater the absolute value of the y-axis coordinate thereof. Therefore, the above-mentioned collected lane guiding lines can be sorted from left to right relative to the vehicle traveling direction in an order from positive to negative y-axis coordinates of the corresponding points.

In some cases, during recording, the sequence numbers of the lane guiding lines may be stored in the tuple of each lane guiding line in the lane guiding line list, but in actual applications or during automatic driving, data sending and receiving may be performed without following the sequence numbers of the lane guiding lines. Therefore, in a process of generating the real-time relative map or during the automatic driving, sorting the guiding lines based on the steps of the above method can avoid a disorder of the lane sequence caused by unsorted pre-recorded GPS data or by errors occurring during data sending.

If the number of the collected lane guiding lines in the lane guiding line list is one, jump to step 404.

In step 404, if there is only one collected lane guiding line in the lane guiding line list, one or more derivative lane guiding lines may be developed according to the one collected lane guiding line. The derivative lane guiding line refers to the lane guiding line obtained by calculation instead of by collecting and recording data.

For road sections in more complicated conditions, the GPS trajectory of each lane needs to be recorded to generate the real-time relative map based on the dynamic conditions of a plurality of recorded GPS trajectories, which is not only time-consuming but also difficult to implement. For example, long-term occupation of an overtaking lane is not allowed by road traffic rules, so it may be more difficult to record complete GPS trajectory data of the overtaking lane. In addition, for highways and other roads with regular shapes, the width, curvature and other parameters of each lane are basically identical, so GPS trajectory data of only one lane may be recorded, and then the real-time relative map with a plurality of lanes, which are developed according to the only one lane, can be generated, to reduce cost and difficulty of generating multiple guiding lines.

Specifically, the collected lane guiding line in the lane guiding line list may be the guiding line of a center lane. FLU coordinates of a point on the guiding line may be expressed as $(x_{center}, y_{center})$, and the heading of the point may be expressed as $\theta_{center}$. A width of a left lane of the collected lane guiding line is $W_{left}$, and a width of a right lane thereof is $W_{right}$. The coordinates of points on the lane guiding lines of the derived lanes, which are developed to the left and to the right by a lane width, may be denoted by $(x_{left}, y_{left})$ and $(x_{right}, y_{right})$, respectively, where

$$\begin{bmatrix} x_{left} \\ y_{left} \end{bmatrix} = \begin{bmatrix} x_{center} \\ y_{center} \end{bmatrix} + W_{left} \begin{bmatrix} cos(\theta_{center} + \pi/2) \\ sin(\theta_{center} + \pi/2) \end{bmatrix} \qquad (10)$$

$$\begin{bmatrix} x_{right} \\ y_{right} \end{bmatrix} = \begin{bmatrix} x_{center} \\ y_{center} \end{bmatrix} + W_{right} \begin{bmatrix} cos(\theta_{center} - \pi/2) \\ sin(\theta_{center} - \pi/2) \end{bmatrix} \qquad (11)$$

Optionally, in step 405, a projection point of the vehicle on each lane guiding line may be determined, and the real-time relative map is generated according to one lane guiding line, which takes the projection point as a starting point and extends along the traveling direction of the vehicle.

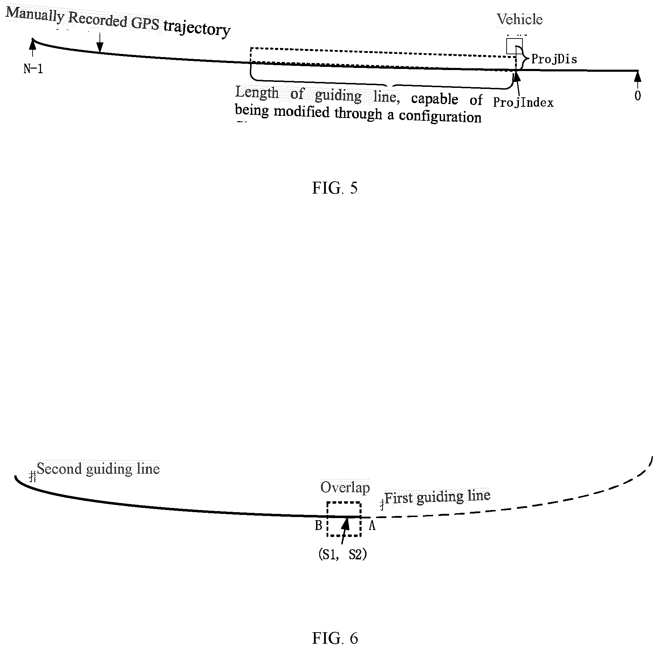

FIG. 5 shows a schematic view of a projection relationship between a location of a vehicle and a lane guiding line. A pair value of the projection point of the vehicle on the lane guiding line is defined as ProjIndexPair:

$$ProjIndexPair = (ProjIndex, \quad ProjDis) \qquad (12)$$

As shown in the figure, ProjIndex in the formula (12) denotes an index number of the projection point of the current position of the vehicle on the guiding line ($0 \leq ProjIndex \leq N-1$, assuming that there are N points on the guiding line, and N is a positive integer greater than 1), and ProjDis denotes a projection distance from the current position of the vehicle to the guiding line.

Based on the above steps, it is unnecessary to scan from the starting point of the lane guiding line during generation of the real-time relative map, thus improving communication efficiency and reducing computation complexity, thereby increasing the speed of generating the real-time relative map.

Optionally, in step 406, it may be determined whether there is a gap between a front and a rear two collected lane guiding lines on a travel path of the vehicle. If there is no gap, jump directly to step 412.

If there is a gap, in step 407, it can be determined whether there is a point pair, points of which are located on the front collected or derived lane guiding line and the rear collected or derived lane guiding line respectively, and have a distance therebetween less than a preset threshold.

If there is no such point pair, then in step 408, the front and the rear lane guiding lines are transitionally connected by means of calculation.

If there is at least one such point pair, in step 409, select one point pair, points of which have the minimum distance from each other. When the vehicle reaches one point of the selected point pair, which is located on the front lane guiding line, the real-time relative map is generated in subsequent applications based on the rear lane guiding line. FIG. 6 is a schematic view showing a situation where there is a point pair, points of which are located on the front and rear lane guiding lines respectively and have a distance therebetween less than a preset threshold.

In a demonstration application of the autonomous driving, a complete recorded GPS trajectory may be used to generate the guiding line. But for actual driving applications, especially for long-distance autonomous driving, it is obviously impossible to generate the real-time relative map by using only one guiding line, and a plurality of guiding lines are necessary for providing a complete path guidance. Therefore, a smooth connection between the front and rear guiding lines has become an urgent problem to be solved.

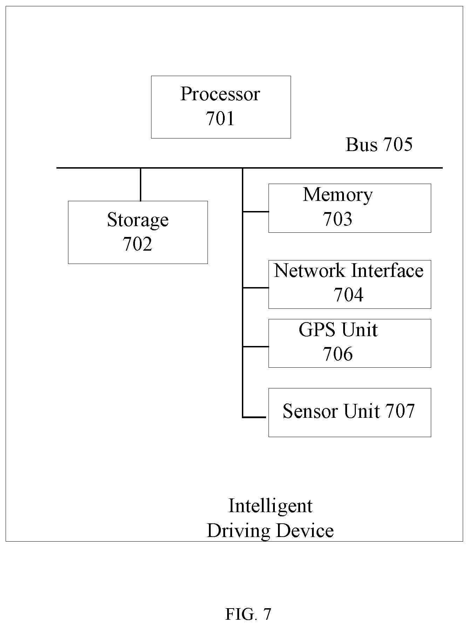

In the process of recording or collecting the GPS trajectory data, the GPS trajectory data may be recorded by segment according to a specified time interval (for example, 3 minutes, which can be modified through a configuration file) or a specified distance (for example, 10 kilometers, which can be modified through the configuration file). According to an embodiment, each segment of such long-distance trajectory data may include several small data intervals, and the data of each segment may correspond to lane sensor data within a distance of the vehicle traveling for, for example, 8 seconds, or within a distance within 250 meters. In order to obtain the real-time guiding line, a length of each frame (for example, a generation frequency is 10 Hz, that is, 0.1 second per frame) of the guiding line cannot be greater than a specified length (according to the analysis in the first section, the configured specified length of 250 meters may meet the requirements of most autopilot requirements), and a lane guiding line with a length of 250 seconds is continuously and circularly generated in real time every 0.1 second. Due to the actual situations during collecting and recording data, there may be data gaps between the front and the rear two guiding lines. In this case, as shown in FIG. 7, a matched point pair (S1, S2) of a first guiding line and a second guiding line may be found, where S1 denotes a point on the first guiding line, and S2 denotes a point on the second guiding line, and the distance between the two points is less than the specified threshold.

During the application of the autonomous driving, before reaching the point S1, the vehicle generates the real-time relative map by means of the first guiding line. When reaching the point S1 on the first guiding line, the vehicle switches to the point S2 on the second guiding line and generates the real-time relative map based on the second guiding line.

Optionally, in step 410, it may be determined whether adjacent lane lines overlap.

When collecting the GPS trajectory data, the collecting vehicle may deviate from the center line of the lane, which may cause the lane lines of adjacent lanes that should overlap with each other to be separated from each other.

If the adjacent lane lines do not overlap, then in step 411, one of the following ways is adopted to determine a shared lane line to generate the real-time relative map:

Taking a central line between the adjacent lane lines as the shared lane line;

Taking one of the adjacent lane lines that is proximate to the vehicle as the shared lane line; and

Taking one of the adjacent lane lines that is away from the vehicle as the shared lane line.

In step 412, the lane guiding line $P_{merge}$ and the real-time relative map are generated by combining conditions of GPS signals and a confidence level of the lane guiding line obtained by the vehicle sensor.

As shown in formula (13), $P_{gps}$ denotes the guiding line generated according to GPS data, and $P_{sensor}$ denotes the guiding line generated by means of the vehicle sensor. If the confidence level $Conf(P_{sensor})$ of the data obtained by vehicle sensor is greater than or equal to a given threshold $T_1$ (for example, $T_1 \geq 0.9$, which can be modified through the configuration file), then $P_{gps}$ and $P_{sensor}$ are weighted to generate thelane guiding line, for example, the weighting coefficient W (for example, W≥0.8, which can be modified through the configuration file) can be used.

If the confidence level $Conf(P_{sensor})$ of the data acquired by the vehicle sensor is greater than or equal to the given threshold $T_2$ (for example, $T_2 \geq 0.6$, which can be modified through the configuration file) and the GPS signal is unstable, then the lane guiding line may be directly generated by means of $P_{sensor}$.

If the GPS signals are stable and the confidence level of the data acquired by the vehicle sensor satisfies $Conf(P_{sensor}) < T_2$ (for example, $T_2 \geq 0.6$), then the lane guiding line may be generated directly by means of $P_{gps}$.

If there are other situations other than those listed above, then they can be considered as error states, and the vehicle may be controlled to stop immediately or exit from the automatic driving mode. The above arrangement can not only solve the problem that the GPS is disturbed or that there is no signal, but also avoid the instability caused by relying too much on the vehicle sensor.

$$P_{merge} = \begin{cases} WP_{sensor} + (1-W)P_{gps} & if\ Conf(P_{sensor}) \geq T_1 \\ P_{sensor} & if\ Conf(P_{sensor}) \geq T_2\ and\ GPS\ is\ unstable \\ P_{gps} & if\ GPS\ is\ stable\ and\ Conf(P_{sensor}) < T_2 \\ Error & other\ situations \end{cases} \quad (13)$$

Optionally, in step 413, restrictions corresponding to traffic rules, such as speed limit, prohibition of overtaking, etc., may also be added to the real-time relative map.

FIG. 7 is a schematic structural diagram illustrating an intelligent driving device according to an embodiment of the present application. The intelligent driving device includes a processor 701 and a storage 702 configured to store a computer program that may run on the processor 701. When executing the computer program, the processor 701 performs steps of the method provided by any one of the embodiments of the present application. The processor 701 and the storage 702 herein do not mean that the corresponding number thereof is one, but may be one or more. The intelligent driving device also includes a memory 703, a network interface 704, and a system bus 705 connecting the memory 703, the network interface 704, the processor 701, and the storage 702. The storage stores the operating system and a data processing device provided in the embodiments of the present application. The processor 701 is configured to support the operation of the entire intelligent driving device. The memory 703 may provide an environment for the running of the computer program in the storage 702. The network interface 704 is configured to be in network communication with external server devices, terminal devices, etc., and configured to receive or send data, for example, obtain driving control instructions input by a user. The intelligent driving device may also include a GPS unit 706 configured to obtain location information of a driving device, and a sensor unit 707 configured to collect lane data in real time. The processor 701 is configured to execute the method shown in FIG. 4 based on the information obtained by each unit, to generate the real-time relative map.

An embodiment of the present application also provides a computer storage medium, for example, including a storage storing a computer program, and the computer program may be executed by a processor to perform steps of the method for generating the real-time relative map provided by any embodiment of the present application. The computer storage medium can be FRAM, ROM, PROM, EPROM, EEPROM, Flash Memory, magnetic surface memory, optical disk, or CD-ROM, etc., and it may also be any device including one or any combination of the foregoing memories.

The technical features of the above embodiments may be combined arbitrarily. In order to make the description concise, not all possible combinations of the technical features in the above embodiments are described. However, as long as there is no contradiction in the combination of these technical features, the combinations should be within the range described in the specification.

The above-mentioned examples are only several embodiments of the present application, and the description thereof is relatively specific and detailed, but should not be understood to be limitations on the scope of the patent application. It should be noted that, for those of ordinary skill in the art, several modifications and improvements can be made without departing from the concept of this application, and all these modifications and improvements fall within the protection scope of this application. Therefore, the protection scope of the present invention shall be subject to the appended claims.

**Claims**

1. A method for generating a real-time relative map, comprising:

   determining a number of collected lane guiding lines based on GPS trajectory data and comprised in a lane guiding line list;

if the lane guiding line list comprises a plurality of collected lane guiding lines, sorting the plurality of collected lane guiding lines based on coordinate values, which are on a coordinate axis perpendicular to a traveling direction of a vehicle, of points having a same serial number on each of the collected guiding lines, and generating the real-time relative map based on at least the sorted collected lane guiding lines and a lane width.

2. The method of claim 1, further comprising:
if there is only one collected lane guiding line in the lane guiding line list, developing one or more derivative lane guiding lines based on the one collected lane guiding line and the lane width, and generating the real-time relative map based on at least one or more derivative lane guiding lines.

3. The method of claim 1 or 2, further comprising:
if there is no collected lane guiding line in the lane guiding line list, generating the real-time relative map based on lane guiding lines, which are generated according to lane lines obtained by a vehicle sensor.

4. The method of claim 1 or 2, further comprising:

determining a projection point of a vehicle on each lane guiding line, and
generating the real-time relative map by taking the projection point as a starting point and extending along a traveling direction of the vehicle.

5. The method of claim 1 or 2, further comprising:

determining whether adjacent lane lines overlap;
if the adjacent lane lines do not overlap, determining a shared lane line according to one of ways of:

taking a central line between the adjacent lane lines as the shared lane line;
taking one of the adjacent lane lines proximate to a vehicle as the shared lane line; and
taking one of the adjacent lane lines away from the vehicle as the shared lane line.

6. The method of claim 1 or 2, further comprising:

based on conditions of GPS signals and a confidence level of lane lines obtained by a vehicle sensor, generating a merged lane guiding line according to the collected lane guiding lines, or derivative lane guiding lines, and/or lane guiding lines generated according to lane lines obtained by a vehicle sensor, and
generating the real-time relative map based on the merged lane guiding line.

7. The method of claim 1 or 2, further comprising:

determining whether there is a gap between a front and a rear collected or derivative lane guiding lines on a travel path of a vehicle;
if there is a gap, determining whether there is a point pair, points of which are located on a front section and a rear section respectively, and have a distance therebetween less than a preset threshold; and
if there are such point pairs, selecting one point pair, points of which have a minimum distance from each other, and when the vehicle reaches one point of the one point pair located on the front section, generating the real-time relative map in subsequent based on the rear section.

8. The method of claim 6, further comprising:
adding restrictions corresponding to traffic rules to the real-time relative map.

9. A computer storage medium on which a computer program is stored, wherein the method of any one of claims 1 to 8 is implemented when the computer program is executed by a processor.

10. An intelligent driving device, comprising:

a processor;
a storage and a network interface coupled with the processor, respectively;
a GPS unit configured to obtain location information of an automatic driving device; and

a vehicle sensor unit configured to collect data of lane data of the automatic driving device;
wherein the processor is configured to perform the method of any one of claims 1-8.

Guiding
Line

Lane
Line

obstacle

Vehicle

FIG. 1

FIG. 2

FIG. 3

401

Determine whehter the number of collected lane guiding lines included in the lane guiding line list is zero? — YES →

412

The real-time relative map is generated by combining conditions of GPS signals and a confidence level of the lane lines obtained by the vehicle sensor.

NO

402

404

One or more derivative lane guiding lines are developed according to the collected lane guiding line. ← NO — Is the number of the collected lane guiding lines in the lane guiding line list greater than one?

413

Restrictions corresponding to traffic rules are added to the real-time relative map.

YES

403

The y-axis coordinates in the FLU coordinate system of the points with a same serial number on each of the collected lane guiding lines are sorted.

405

A projection point of the vehicle on each lane guiding line is determined, and the real-time relative map is generated by taking the projection point as a starting point and extending along the traveling direction of the vehicle.

406

Determined whether there is a gap between a front and a rear two collected lane guiding lines on a travel path of the vehicle. — NO →

YES

407

Is there a point pair, points of which are located on the front and the rear lane guiding lines respectively and have a distance therebetween less than a preset threshold?

410

Adjacent lane lines overlap? — YES →

NO

411

Take a central line between the adjacent lane lines as the shared lane line; or take one of the adjacent lane lines that is proximate to the vehicle as the shared lane line; or take one of the adjacent lane lines that is away from the vehicle as the shared lane line.

YES

409

Select a point pair, points of which having a minimum distance from each other, and when the vehicle reaches a point of the point pair, which is located on the front lane guiding line, the real-time relative map is generated in subsequent applications based on the rear lane guiding line map.

408

The front and the rear two lane guiding lines are transitionally connected by means of calculation.

FIG. 4

14

Manually Recorded GPS trajectory

Vehicle

N-1

ProjDis

Length of guiding line, capable of ProjIndex
being modified through a configuration

0

FIG. 5

Second guiding line

Overlap

First guiding line

B A

(S1, S2)

FIG. 6

Processor
701

Bus 705

Storage
702

Memory
703

Network Interface
704

GPS Unit
706

Sensor Unit 707

Intelligent
Driving Device

FIG. 7

## INTERNATIONAL SEARCH REPORT

| International application No. |
|---|
| **PCT/CN2019/126367** |

| A. | CLASSIFICATION OF SUBJECT MATTER |
|---|---|

G06K 9/00(2006.01)i

According to International Patent Classification (IPC) or to both national classification and IPC

| B. | FIELDS SEARCHED |
|---|---|

Minimum documentation searched (classification system followed by classification symbols)

G06K

Documentation searched other than minimum documentation to the extent that such documents are included in the fields searched

Electronic data base consulted during the international search (name of data base and, where practicable, search terms used)

CNPAT, CNKI, WPI, EPODOC: 车辆, 车道, 指引, 引导, 多, 顺序, 排序, 地图, 宽度, 导航, 实时, 变道, 并线, 并道, 换道, 垂直, 横向, GPS, auto, vehicle, traffic, navigate, change, lane, map, sort, order, guide

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 106441319 A (HEFEI INSTITUTES OF PHYSICAL SCIENCE, CHINESE ACADEMY OF SCIENCES) 22 February 2017 (2017-02-22) description, paragraphs [0020]-[0054] | 1-10 |
| A | CN 108645420 A (BEIJING UNION UNIVERSITY) 12 October 2018 (2018-10-12) entire document | 1-10 |
| A | CN 105292116 A (GM GLOBAL TECHNOLOGY OPERATIONS LLC) 03 February 2016 (2016-02-03) entire document | 1-10 |
| A | US 2016129840 A1 (MAGNA ELECTRONICS INC.) 12 May 2016 (2016-05-12) entire document | 1-10 |
| A | CN 107767696 A (DURA OPERATING LLC) 06 March 2018 (2018-03-06) entire document | 1-10 |

☐ Further documents are listed in the continuation of Box C.  ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **03 March 2020** | **19 March 2020** |

| Name and mailing address of the ISA/CN | Authorized officer |
|---|---|
| **China National Intellectual Property Administration (ISA/ CN)** **No. 6, Xitucheng Road, Jimenqiao Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2019/126367**

| Patent document cited in search report | | | Publication date (day/month/year) | Patent family member(s) | | | Publication date (day/month/year) |
|---|---|---|---|---|---|---|---|
| CN | 106441319 | A | 22 February 2017 | None | | | |
| CN | 108645420 | A | 12 October 2018 | None | | | |
| CN | 105292116 | A | 03 February 2016 | US | 2015353085 | A1 | 10 December 2015 |
| | | | | DE | 102015108605 | A1 | 10 December 2015 |
| US | 2016129840 | A1 | 12 May 2016 | None | | | |
| CN | 107767696 | A | 06 March 2018 | EP | 3293488 | A2 | 14 March 2018 |
| | | | | US | 2018053060 | A1 | 22 February 2018 |

Form PCT/ISA/210 (patent family annex) (January 2015)